# EUROPÄISCHE PATENTANMELDUNG

(11) **EP 0 944 236 A1**
(43) Veröffentlichungstag der Anmeldung: **22.09.1999**
(21) Anmeldenummer: 99440046.3
(22) Anmeldetag: 05.03.1999
(51) Int. Cl.: H04N 1/00

(54) **Verfahren zum Empfang von Faxnachrichten anstelle eines Faxgerätes eines Teilnehmers sowie Faxempfangseinrichtung, Server und Vermittlungsstelle hierzu**

(30) Priorität: 16.03.1998 DE 19811407
(71) Anmelder: ALCATEL, 75008 Paris (FR)
(72) Erfinder: Uebele, Roland, 73614 Schorndorf (DE)
(74) Vertreter: Brose, Gerhard, Dipl.-Ing.

(57) **Zusammenfassung**

Die vorliegende Erfindung betrifft ein Verfahren zum Empfang von Faxnachrichten anstelle eines Faxgerätes eines Teilnehmers, sowie eine Faxempfangseinrichtung (FRCV), einen Server und eine Vermittlungsstelle hierfür. Dabei erkennt die Faxempfangseinrichtung (FRCV), daß sie eine ankommende Faxnachricht anstelle eines Faxgerätes empfangen soll. Die Faxempfangseinrichtung (FRCV) empfängt und speichert dann die Faxnachricht. Danach baut ein Datenendgerät (DT) des Teilnehmers eine Verbindung über ein On-Line-Datennetzwerk (ODN) zu der Faxempfangseinrichtung (FRCV) auf. Die Faxempfangseinrichtung (FRCV) sendet die Faxnachricht an das Datenendgerät (DT) über das On-Line-Datennetzwerk (ODN). Anschließend beenden das Datenendgerät (DT) oder die Faxempfangseinrichtung (FRCV) die Verbindung über das On-Line-Datennetzwerk (ODN) zu der Faxempfangseinrichtung (FRCV).

## Beschreibung

Die vorliegende Erfindung betrifft ein Verfahren zum Empfang von Faxnachrichten anstelle eines Faxgerätes eines Teilnehmers, sowie eine Faxempfangseinrichtung gemäß dem Oberbegriff des Anspruchs 7 hierfür, einen Server gemäß dem Oberbegriff des Anspruchs 9 hierfür und eine Vermittlungsstelle gemäß dem Oberbegriff des Anspruchs 10 hierfür.

Faxnachrichten werden im allgemeinen durch speziell für das Senden und Empfangen von Faxnachrichten geeigneten Faxgeräte empfangen. Diese Faxgeräte enthalten im wesentlichen einen Scanner zum Einlesen zu versendender Dokumente, einen Drucker zum Ausgeben empfangener Faxnachrichten und ein Modem, mit dem Faxnachrichten über eine Telefonleitung empfangen und versendet werden können. Durch die Fertigung in großen Stückzahlen sind solche Faxgeräte inzwischen preisgünstig zu erwerben. Aber für jemanden, der nur sehr selten einmal eine Faxnachricht empfangen oder versenden will, ist ein Faxgerät doch noch so teuer, daß auf die Anschaffung eines eigenen Faxgerätes verzichtet wird. Weil für den Betrieb eines Faxgerätes die Stromversorgung des Telefonnetzes nicht ausreicht, benötigt das Faxgerät eine zusätzliche Stromversorgung. Wenn das Faxgerät jederzeit empfangsbereit sein soll, muß diese Stromversorgung ständig an das Stromnetz angeschlossen sein und verbraucht im sogenannten Standby-Betrieb auch dann ständig Energie, wenn keine Faxnachrichten versendet oder empfangen werden.

Im Gegensatz zu Faxgeräten sind in zunehmendem Maße besonders in Privathaushalten Personal Computer vorhanden. Durch den Einbau eines Faxmodems können diese Personal Computer für den Empfang und das Senden von Faxnachrichten ertüchtigt werden. Zwar kann durch einen Einbau eines Faxmodems in den heimischen Personal Computer auf die Anschaffung eines Faxgerätes verzichtet werden, aber auch in diesem Fall muß der Personal Computer, zumindest aber das Faxmodem für eine ständige Empfangsbereitschaft in einem Energie verbrauchenden Standby-Betrieb betrieben werden.

Zur Vermeidung des Standby-Betriebes ist es möglich, eine ankommende, für einen Teilnehmeranschluß bestimmte Faxnachricht von einem sogenannten Faxbox-Dienst empfangen zu lassen. Ein solcher Dienst wird von manchen Telekommunikationsnetzen angeboten und ist vergleichbar mit einem sogenannten Voicebox -Dienst, der die Funktion eines netzseitigen Anrufbeantworters wahrnimmt. Ankommende Faxnachrichten für den Faxbox-Dienst werden von einer Einrichtung in einem Telekommunikationsnetz, im allgemeinen von einem Server, empfangen und gespeichert. Die gespeicherten Faxnachrichten können dann mit einem Faxgerät oder auch einem Personal Computer mit eingebautem Faxgerät abgefragt werden. Zwar wird in diesem Fall der Standby-Betrieb eines Faxgerätes vermieden, trotzdem ist ein für den Empfang einer Faxnachricht geeignetes Gerät erforderlich.

Ein weiteres Problem mit bekannten Faxbox-Diensten ergibt sich dann, wenn ein Teilnehmer z.B. einen sogenannten UPT-Dienst (Universal Personal Telecommunications) gebucht hat, mit dem der Teilnehmer unter einer stets gleichlautenden UPT-Teilnehmernummer sich an verschiedenen Orten eines Telekommunikationsnetzes zum Empfang und Senden von Daten anmelden kann. Wenn der Teilnehmer beispielsweise auf Reisen kein Faxgerät mit sich führt, kann er zwar an die UPT-Teilnehmernummer gerichtete Faxnachrichten von dem Telekommunikationsnetz in eine Faxbox oder an das heimische Faxgerät leiten lassen. Unterwegs jedoch kann der Teilnehmer keine Faxnachrichten empfangen.

Ein Personal Computer mit einem Faxmodem kann auch zu einem Fax-Server ausgebaut werden, der für weitere Personal Computer den Empfang von Faxnachrichten übernimmt. In dem Artikel "Getting your fax straight: getting ahead of the game with fax server technology" erschienen in der Zeitschrift ,,Network Computing" in der Ausgabe Februar 1997, Band 6, Nummer 2, ISSN 0966-7873, veröffentlicht von "Business and Technical Communications", wird auf der Seite 46 ein Fax-Server erwähnt, der in einer Mailbox-Funktion für weitere an den Fax-Server angeschlossene Personal Computer den Empfang von Faxnachrichten übernimmt. Diese Faxnachrichten können bei dem Fax-Server über das Internet abgefragt werden. Das Internet dient bei diesem "Fax over Internet" lediglich als Übertragungsmedium zwischen einem sendenden und einem empfangenden Fax-Server. Der sendende Fax-Server verpackt eine von einem Faxgerät empfangene Faxnachricht zum Versand an den empfangenden Fax-Server in ein im Internet gängiges Datenformat, bildet so eine Internet-Faxnachricht und sendet die Internet-Faxnachricht über das Internet an den empfangenden Fax-Server. Dieser Fax-Server packt aus der Internet-Faxnachricht die Faxnachricht aus und versendet diese ausgepackte Faxnachricht an ein Faxgerät. Wenn also von dem als Mailbox dienenden Fax-Server eine Faxnachricht empfangen worden ist und diese Faxnachricht von einem Personal Computer aus über das Internet abgefragt werden soll, verpackt der Fax-Server die Faxnachricht in ein im Internet übliches Datenformat und versendet die verpackte Faxnachricht über das Internet an einen Empfangs-Server. Diese Empfangs-Server wandelt die Faxnachricht wieder in das ursprüngliche Faxformat zurück und sendet die Faxnachricht dann an den abfragenden Personal Computer auf einer Telefonleitung eines Telekommunikationsnetzes. Auch in diesem Fall ist ein für den Empfang einer Faxnachricht geeignetes Gerät, ein Personal Computer mit Faxmodem oder ein Faxgerät, erforderlich.

Aufgabe der Erfindung ist es, Faxnachrichten auf komfortable Weise auch dann empfangen zu können, auch wenn kein Faxgerät zum Empfang vorhanden ist.

Diese Aufgabe wird durch ein Verfahren gemäß der technischen Lehre des Anspruchs 1, eine Faxempfangseinrichtung gemäß der technischen Lehre des Anspruchs 7, einen Server gemäß der technischen Lehre des Anspruchs 9 und eine Vermittlungsstelle gemäß der technischen Lehre des Anspruchs 10 gelöst. Weitere vorteilhafte Ausgestaltungen der Erfindung sind den abhängigen Ansprüchen und der Beschreibung zu entnehmen.

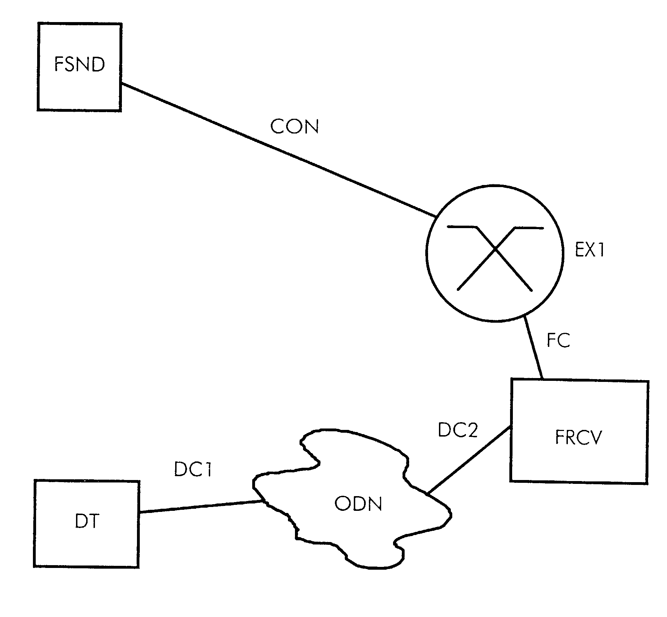

Im folgenden werden die Erfindung und ihre Vorteile anhand von Ausführungsbeispielen unter Zuhilfenahme der Zeichnung dargestellt.
- Die Figur: zeigt eine Anordnung zur Ausführung des erfindungsgemäßen Verfahrens mit einer Faxsendeeinrichtung FSND, einer erfindungsgemäßen Faxempfangseinrichtung FRCV, einer Vermittlungsstelle EX1 und einem Datenendgerät DT.

In der Figur ist eine Anordnung gezeigt, in der das erfindungsgemäße Verfahren angewendet werden kann. Eine Faxsendeeinrichtung FSND ist über eine Verbindung CON mit der Vermittlungsstelle EX1 verbunden. Von dem Faxgerät FSND aus können Faxnachrichten an die Vermittlungsstelle EX1 versendet werden. Die Verbindung CON kann über weitere, in der Figur nicht dargestellte Einrichtungen eines Telekommunikationsnetzes führen, z.B. über Vorfeldeinrichtungen und über weitere Vermittlungsstellen. Die Vermittlungsstelle EX1 ist über die Verbindung FC mit einer Faxempfangseinrichtung FRCV verbunden. Die Faxempfangseinrichtung FRCV empfängt Faxnachrichten anstelle eines Faxgerätes eines Teilnehmers. Die Verbindung FC kann ebenso wie die Verbindung CON über weitere, in der Figur nicht dargestellte Einrichtungen eines Telekommunikationsnetzes führen. Wenn die Vermittlungsstelle EX1 von der Faxsendeeinrichtung FSND eine Faxnachricht für den Teilnehmer empfängt, so kann sie diese Faxnachricht an die Faxempfangseinrichtung FRCV weiterleiten, die diese Faxnachricht anstelle eines Faxgerätes des Teilnehmers entgegennimmt und speichert.

Die Faxempfangseinrichtung FRCV kann als eigenständige Einrichtung arbeiten oder in einen Server eingebaut sein, der von der Vermittlungsstelle EX1 aus angesprochen werden kann. Ebenso kann anstatt der Faxempfangseinrichtung FRCV ein erfindungsgemäßer Server die Funktionen der Faxempfangseinrichtung FRCV erbringen und über die Verbindung FC mit der Vermittlungsstelle EX1 verbunden sein. Die Vermittlungsstelle EX1 kann z.B. ein sogenannter SSP (Service Switching Point) eines Intelligenten Netzes (IN) sein, der Server ein sogenannter SCP (Service Control Point), der die Funktionen der Faxempfangseinrichtung FRCV entweder alleine oder mit Hilfe einer sogenannten Intelligenten Peripherie erbringen kann. Die Faxempfangseinrichtung FRCV kann jedoch auch in die Vermittlungsstelle EX1 integriert sein, so daß die Verbindung FC eine interne Verbindung innerhalb der Vermittlungsstelle EX1 ist. Weiterhin kann anstatt der Vermittlungsstelle EX1 und der separaten Faxempfangseinrichtung FRCV eine erfindungsgemäße Vermittlungsstelle eingesetzt werden, welche die Funktionen der Vermittlungsstelle EX1 und der Faxempfangseinrichtung FRCV zusammen erbringen kann.

Die Faxempfangseinrichtung FRCV kann z.B. dann anstelle eines Faxgerätes eines Teilnehmers ankommende Faxnachrichten empfangen, wenn ein in der Figur nicht dargestelltes Faxgerät eines Teilnehmers eine Faxnachricht nicht entgegennimmt, weil das Faxgerät an einem für den Empfang von Faxnachrichten bestimmten, ebenfalls nicht dargestellten Faxgeräte-Teilnehmeranschluß des Teilnehmers zwar angeschlossen, aber nicht empfangsbereit eingeschaltet ist. Der Begriff ,,Faxgeräte-Teilnehmeranschluß" ist zur einfachen Darstellung gewählt und kann z.B. für eine Teilnehmeranschlußleitung einer Ortsvermittlungsstelle stehen, an der üblicherweise ein Faxgerät des Teilnehmers angeschlossen ist, oder für eine Rufnummer eines ISDN-Teilnehmeranschlusses, die einem Faxgerät zugeordnet ist. Der Faxgeräte-Teilnehmeranschluß kann z.B. von der Vermittlungsstelle EX1 geschaltet und bedient werden. Die Faxempfangseinrichtung FRCV stellt dann bei einer ankommenden Faxnachricht fest, ob das Faxgerät des Teilnehmers an dem Faxgeräte-Teilnehmeranschluß empfangsbereit ist, indem sie z.B. überwacht oder von der Vermittlungsstelle EX1 überwachen läßt, ob der Ruf mit der ankommenden Faxnachricht nach dreimaligem oder fünfmaligem Rufzeichen von dem Faxgerät an dem Teilnehmeranschluß angenommen wird.

In einer vorteilhaften Variante der Erfindung kann der Teilnehmer auch beispielsweise einen sogenannten UPT-Dienst (Universal Personal Telecommunications) gebucht haben, mit dem der Teilnehmer unter einer stets gleichlautenden UPT-Teilnehmernummer sich an verschiedenen Orten eines Telekommunikationsnetzes zum Empfang und Senden von Daten anmelden kann. Wenn der Teilnehmer dann auf Reisen kein Faxgerät mit sich führt, kann er das Faxgerät bei dem UPT-Dienst abmelden. Die Faxempfangseinrichtung FRCV stellt dann bei einer ankommenden Faxnachricht durch Abfrage momentaner UPT-Dienstparameter fest, daß sie an die UPT-Teilnehmernummer gerichtete Faxnachrichten anstelle eines Faxgerätes empfangen soll. Der Teilnehmer kann dann, wie später noch deutlich wird, die Faxempfangseinrichtung FRCV auch von unterwegs abfragen.

Besonders vorteilhaft wirkt sich die Erfindung aus, wenn der Teilnehmer zwar über ein Datenendgerät DT, nicht jedoch über ein Faxgerät verfügt. In diesem Fall ist für den Teilnehmer kein Teilnehmeranschluß für ein Faxgerät erforderlich. Es ist dann vorteilhaft, wenn dem Teilnehmer eine Fax-Teilnehmernummer eigens für den Empfang von Faxnachrichten zugewiesen wird. Wenn dann die Vermittlungsstelle EX1 von der Faxsendeeinrichtung FSND eine an die Fax-Teilnehmernummer des Teilnehmers gerichtete Faxnachricht empfängt, kann die Vermittlungsstelle EX1 diese Faxnachricht unmittelbar an die Faxempfangseinrichtung FRCV weitersenden. Die Vermittlungsstelle EX1 gibt dabei der Faxempfangseinrichtung FRCV zusammen mit der zu speichernden Faxnachricht z.B. die Fax-Teilnehmernummer des Teilnehmers an, damit die Faxnachricht dem Teilnehmer zugeordnet werden kann.

Der Teilnehmer kann durch regelmäßiges Anfragen bei der Faxempfangseinrichtung FRCV feststellen, ob die Faxempfangseinrichtung FRCV Faxnachrichten für ihn empfangen hat, z.B. mittels einer im folgenden noch erläuterten Abfrage mit Hilfe des in der Figur dargestellten Datenendgerätes DT. Vorteilhafterweise aber informiert die Faxempfangseinrichtung FRCV von sich aus den Teilnehmer mit Hilfe einer Benachrichtigung darüber, daß für ihn eine Faxnachricht empfangen worden ist. Eine solche Benachrichtigung des Teilnehmers durch die Faxempfangseinrichtung FRCV wird später noch näher erklärt.

Weiterhin zeigt die Figur ein Datenendgerät DT, das über eine Verbindung DC1 mit einem On-Line-Datennetzwerk ODN verbunden ist. Das On-Line-Datennetzwerk ODN seinerseits ist über die Verbindung DC2 mit der Faxempfangseinrichtung FRCV verbunden. Ein typisches Beispiel für das On-Line-Datennetzwerk ODN ist das Internet. Es kommen jedoch auch Abwandlungen und Weiterentwicklungen des Internets oder andere Formen von Datennetzwerken in Frage, z.B. ein Intranet. Da Datennetzwerke im allgemeinen nicht leitungsvermittelt sondern paketvermittelt arbeiten, kann möglicherweise bei der Datenübertragung zwischen zwei Nutzern des Daten netzwerkes ein merklicher Zeitverzug eintreten. Weil die genannten beiden Nutzer jedoch über eine gedachte Verbindung, eine virtuelle Verbindung des Datennetzwerkes miteinander verbunden sind, stellt das Datennetzwerk dennoch eine On-Line-Verbindung zwischen den beiden Nutzern her, wenn auch bisweilen ein Zeitverzug eintritt. Als Datenendgerät DT kann ein Personal Computer eingesetzt werden, der über eine Schnittstelleneinrichtung verfügt, mit der ein Zugang zu dem On-Line-Datennetzwerk ODN möglich ist. Die Verbindung DC1 zu dem On-Line-Datennetzwerk ODN kann z.B. als eine Telefonverbindung über ein Telefonnetz zu einem in der Figur nicht dargestellten Zugangsrechner aufgebaut werden, der als Schnittstelle zwischen dem Telefonnetz und dem On-Line-Datennetzwerk ODN dient. Das Datenendgerät DT kann dann Daten z.B. über ein Modem oder eine ISDN-Schnittstellenkarte auf der Verbindung DC1 mit dem On-Line-Datennetzwerk ODN austauschen. Ein Modem wird eingesetzt, wenn die Verbindung DC1 nur analoge Übertragung zuläßt, eine ISDN-Schnittstellenkarte, wenn die Verbindung DC1 die Übertragung von digitalen ISDN-Datenpaketen erlaubt. Wenn das On-Line-Datennetzwerk ODN das Internet ist, ist der Aufbau der Verbindung DC1 mit Hilfe eines Personal Computers und einer geeigneten Schnittstellensoftware allgemein bekannt.

Es ist auch möglich, daß das Datenendgerät DT ein Kombinationsgerät ist, das die Verbindung DC1 mit dem On-Line-Datennetzwerk ODN aufbauen kann und weiterhin die Funktionen eines Telefonapparates leisten kann. In seiner Funktion als Telefonapparat kann das Datenendgerät DT dann über eine in der Figur nicht dargestellte Teilnehmeranschlußleitung mit der Vermittlungsstelle EX1 verbunden sein.

Um ausgehend von der Verbindung DC1 eine vollständige Verbindung bis zu der Faxempfangseinrichtung FRCV aufzubauen, gibt das Datenendgerät DT dem On-Line-Datennetzwerk ODN eine Adresse der Faxempfangseinrichtung FRCV an. Wenn das On-Line-Datennetzwerk ODN das Internet ist, kann diese Adresse z.B. eine sogenannte URL-Adresse sein (Uniform Resource Locator), mit der es mit den im Internet gebräuchlichen Mitteln möglich ist, von dem Datenendgerät DT aus über das On-Line-Datennetzwerk ODN eine Verbindung zu einer Eingangsschnittstelle, einer sogenannten Homepage, der Faxempfangseinrichtung FRCV aufzubauen. Das On-Line-Datennetzwerk ODN baut dann die vollständige Verbindung bis zu der Faxempfangseinrichtung FRCV einschließlich der Verbindung DC2 auf. Anschließend sendet das Datenendgerät DT an die Faxempfangseinrichtung FRCV einen Zugangswunsch zu den Faxnachrichten, die von der Faxempfangseinrichtung FRCV empfangen und gespeichert worden sind. Als Zugangswunsch kann z.B. eine spezielle Teilnehmerkennung des Teilnehmers oder die bereits erwähnte Fax-Teilnehmernummer gesendet werden, mit der Faxnachrichten an den Teilnehmer gesendet werden können.

Vorteilhafterweise prüft die Faxempfangseinrichtung FRCV den Zugangswunsch und stellt dabei fest, ob sie den Zugang zu den empfangenen Faxnachrichten des Teilnehmers gewähren kann. Z.B. kann in Verbindung mit dem Zugangswunsch eine persönliche Identifikationsnummer, eine sogenannte Personal Identifikation Number (PIN), von dem Datenendgerät DT an die Faxempfangseinrichtung FRCV gesendet werden. Nur wenn die an dem Datenendgerät DT eingegebene PIN mit einer von der Faxempfangseinrichtung FRCV im Zusammenhang mit dem Zugangswunsch erwarteten PIN übereinstimmt, erlaubt die Faxempfangseinrichtung FRCV den Zugriff zu den Faxnachrichten. So ist sichergestellt, daß nur ein dazu berechtigter Teilnehmer oder Vertreter des Teilnehmers auf die Faxnachrichten des Teilnehmers zugreifen können. Es kann aber auch vorbestimmt sein, daß allein schon die Angabe der Fax-Teilnehmernummer genügt, um einen Zugang zu den Faxnachrichten zu erhalten. Die letztere Variante kann z.B. dann gewählt werden, wenn die Faxnachrichten keinen besonderen Schutz benötigen, weil sie ohnehin nur allgemein bekannte Informationen oder auf anderen Wegen ebenfalls leicht zugängliche Informationen enthalten. In der letzteren Ausführungsform kann die Faxempfangseinrichtung FRCV sogar einen sogenannten "Fax-on-Demand"-Dienst leisten, bei dem Faxnachrichten für beliebige Teilnehmer abrufbar sind.

Ist der Zugang zu den Telekommunikationsdienst-Daten nicht gewährbar, meldet dies die Faxempfangseinrichtung FRCV an das Datenendgerät DT. Dann kann entweder an dem Datenendgerät DT ein erneuter Zugang mit einer geänderten Zugangskennung, z.B. mit einer anderen PIN, versucht werden, oder die Verbindung der Faxempfangseinrichtung FRCV mit dem Datenendgerät DT wird abgebaut.

Wenn der Teilnehmer mit dem Datenendgerät DT Zugang zu seinen Faxnachrichten in der Faxempfangseinrichtung FRCV erhalten hat, kann die Faxempfangseinrichtung FRCV ohne weiteres Zutun durch das Datenendgerät DT die für den Teilnehmer bereitliegenden Faxnachrichten an das Datenendgerät DT senden. Ein größerer Komfort wird aber angeboten, wenn von dem Datenendgerät DT die Faxnachrichten bei der Faxempfangseinrichtung FRCV jeweils einzeln, in Gruppen oder insgesamt angefordert werden können. Dann sendet die Faxempfangseinrichtung FRCV gespeicherte Faxnachrichten in der speziell geforderten Weise an das Datenendgerät DT. Das Datenendgerät DT empfängt dann die Faxnachrichten, übernimmt sie in einen Speicher oder gibt sie auf einem Ausgabemedium aus, z.B. auf einem Bildschirm oder auf einem Drucker.

Nachdem die Faxnachrichten abgefragt wurden, beendet das Datenendgerät DT die Verbindung mit der Faxempfangseinrichtung FRCV. Die Verbindung kann jedoch auch von der Faxempfangseinrichtung FRCV ihrerseits abgebaut werden, z.B. wenn von dem Datenendgerät DT über längere Zeit keine Anforderung von weiteren Faxnachrichten erfolgt, so daß Verbindungskapazität der Faxempfangseinrichtung FRCV durch die ungenutzte Verbindung zu dem Datenendgerät DT unnötig lange blockiert wird und deshalb eine Zeitüberwachung in der Faxempfangseinrichtung FRCV den Verbindungsabbau veranlaßt. Die Faxempfangseinrichtung FRCV kann die Verbindung mit dem Datenendgerät DT auch dann beenden, wenn durch das Datenendgerät DT alle in der Faxempfangseinrichtung FRCV für den Teilnehmer gespeicherten Faxnachrichten abgefragt worden sind.

Die Faxempfangseinrichtung FRCV kann Faxnachrichten von der Vermittlungsstelle EX1 unmodifiziert in der Form empfangen, wie sie von der Faxsendeeinrichtung FSND versendet worden sind, d.h. die Faxsendeeinrichtung FSND und die Faxempfangseinrichtung FRCV verhalten sich wie ein sendendes bzw. empfangendes Faxgerät mit einem Modem zum Senden und Empfangen von Faxdaten in modulierter Form, wie sie z.B. von üblicherweise eingesetzten sogenannten Gruppe-2-Faxgeräten gesendet und empfangen werden können. Die Faxsendeeinrichtung FSND kann jedoch auch ein Internet-Fax-Server sein, wie er bei einem Versendeverfahren "Fax over Internet" üblich ist. Ein Internet-Fax-Server sendet Faxnachrichten in einer unmodulierten Binärdatenform in einem im Internet gängigen Protokoll, bildet also eine Internet-Faxnachricht. Eine solche Internet-Faxnachricht kann in Datenpaketen, z.B. auf einer ISDN-Datenleitung, von der Faxsendeeinrichtung FSND versendet und von der Faxempfangseinrichtung FRCV empfangen und abgespeichert werden.

Von der Faxsendeeinrichtung FSND gesendete Faxnachrichten können jedoch auch bereits von der Vermittlungsstelle EX1 in ein Datenformat gewandelt werden, das speziell für den Datenaustausch auf der Verbindung FC zwischen der Vermittlungsstelle EX1 und der Faxempfangseinrichtung FRCV festgelegt worden ist. Diese Variante kann z.B. dann gewählt werden, wenn die Faxempfangseinrichtung FRCV in die Vermittlungsstelle EX1 integriert ist und die Verbindung FC eine interne Verbindung mit einer eigens definierten Schnittstelle innerhalb der Vermittlungsstelle EX1 ist.

Insbesondere wenn die Faxempfangseinrichtung FRCV in die Vermittlungsstelle EX1 integriert ist können alle Rufe, die zu dem Teilnehmeranschluß des Teilnehmers führen, dahingehend untersucht werden, ob sie eine ankommende Faxnachricht enthalten. Wenn die Faxsendeeinrichtung FSND z.B. ein Faxgerät ist, das ISDN-Faxnachrichten nach dem sogenannten Gruppe-4-Standard versendet, kann die Vermittlungsstelle EX1 bereits aus den Signalisierungsinformationen des ankommenden Rufes mit der Faxnachricht entnehmen, daß es sich bei dem ankommenden Ruf um einen Ruf mit einer Faxnachricht handelt. Einen solchen Ruf kann die Vermittlungsstelle EX1 statt dem Teilnehmeranschluß des Teilnehmers unmittelbar der Faxempfangseinrichtung FRCV zuführen. Wenn die Vermittlungsstelle EX1 und die Faxempfangseinrichtung FRCV getrennte Einrichtungen sind, können für das genannte Herausfiltern von Faxnachrichten auch alle für den Teilnehmeranschluß des Teilnehmers bestimmten Rufe von der Vermittlungsstelle EX1 über die Verbindung FC zunächst zu der Faxempfangseinrichtung FRCV geleitet werden. Diese filtert dann gegebenenfalls Faxnachrichten aus diesen Rufen heraus und leitet Rufe ohne Faxnachrichten zur Weiterleitung an den Teilnehmeranschluß wieder zu der Vermittlungsstelle EX1 zurück.

Bei der Abfrage der Faxnachrichten kann die Faxempfangseinrichtung FRCV lediglich die Faxnachrichten als solche an das Datenendgerät DT senden, die dann durch das Datenendgerät DT interpretiert und ausgegeben werden. In umgekehrter Richtung sendet dann das Datenendgerät DT nur die bereits erwähnte Zugangskennung und PIN und Anforderungen für Faxnachrichten an die Faxempfangseinrichtung FRCV. In diesem Fall sorgt das Datenendgerät DT für eine Bedienerführung mit Bildschirmmenüs zur Abfrage der Faxnachrichten bei der Faxempfangseinrichtung FRCV, gegebenenfalls für die Prüfung an dem Datenendgerät DT eingegebener Anforderungsbefehle und für die Ausgabe von Faxnachrichten, die bei der Faxempfangseinrichtung FRCV abgerufen worden sind. Dazu verwendet das Datenendgerät DT eine auf einem Speichermedium des Datenendgerätes DT dauerhaft installierte und von dort abrufbare Software.

Es ist aber auch möglich, daß die Faxempfangseinrichtung FRCV und das Datenendgerät DT mit zusätzlichen Interpretationshinweisen angereicherte Daten austauschen. Dann sendet die Faxempfangseinrichtung FRCV zusätzliche Anweisungen zum Aufbau einer Menüführung für den Bediener auf dem Bildschirm des Datenendgerätes DT oder zusätzliche Anweisungen zur akustischen Ausgabe von Bedienhinweisen an das Datenendgerät DT. So wird die Form der Ausgabe an dem Datenendgerät DT unmittelbar von der Faxempfangseinrichtung FRCV gesteuert und sowohl Änderungen als auch Erweiterungen der Ausgabeform können zentral von der Faxempfangseinrichtung FRCV ausgehen und sind nicht mehr abhängig von einer auf einem Speichermedium des Datenendgerätes DT fest installierten Software. Das Datenendgerät DT verfügt dann lediglich über Auswertemittel, um die von der Faxempfangseinrichtung FRCV gesendeten Anweisungen zu interpretieren.

Wenn das On-Line-Datennetzwerk ODN das Internet ist, kann für den letztgenannten Austausch von erweiterten Daten zwischen der Vermittlungsstelle EX1 und dem Datenendgerät DT die Beschreibungssprache HyperText Markup Language (HTML) verwendet werden. Die Vermittlungsstelle EX1 sendet dann an das Datenendgerät DT sogenannte HTML-Dokumente, die aus einer Folge von ASCII-Zeichen bestehen (American Standard Code for Information Interchange) und von dem Datenendgerät DT mittels eines speziellen Auswerteprogrammes, eines sogenannten Browsers gelesen und interpretiert werden. Die Syntax der HTML-Dokumente ist genau festgelegt und erlaubt es, z.B. die Art der schriftlichen Darstellungen von Bildschirmseiten oder auch ganze akustische Sequenzen mit der HTML-Beschreibungssprache zu beschreiben. Das Datenendgerät DT kann auf Eingabefeldern einer Bildschirmseite Bedienfelder anzeigen, so daß der Bediener des Datenendgerätes DT z.B. auswählen kann, welche der in der Faxempfangseinrichtung FRCV gespeicherten Faxnachrichten er empfangen will. Das Datenendgerät DT sendet dann die Auswahl des Bedieners an die Faxempfangseinrichtung FRCV, die dann die ausgewählten Faxnachrichten an das Datenendgerät DT zurücksendet. Auf diese Weise kann der Bediener des Datenendgerät DT z.B. auch anweisen, in welchem Datenformat die empfangenen Faxnachrichten an das Datenendgerät DT gesendet werden sollen. Gerade wenn das Datenendgerät DT nur ein bestimmtes Datenformat verarbeiten kann, ist es besonders vorteilhaft, wenn das Datenendgerät DT eine Anweisung über das gewünschte Datenformat an die Faxempfangseinrichtung FRCV geben kann, die Faxempfangseinrichtung FRCV empfangene Faxnachrichten in das gewünschte Datenformat konvertiert und Faxnachrichten nur in diesem Datenformat an das Datenendgerät DT sendet. Auf diese Weise ist es z.B. möglich, daß eine von der Faxempfangseinrichtung FRCV in modulierter Form empfangene und anschließend demodulierte Faxnachricht in einem binären Datenformat an das Datenendgerät DT weitergegeben wird. Als binäres Datenformat kann z.B. das sogenannte "Tagged Image Format" eingesetzt werden, mit dem Bilddateien darstellbar sind. Das Datenendgerät DT braucht dann kein eigenes Modem zur Demodulation von Faxnachrichten.

Von dem Datenendgerät DT aus kann die Faxempfangseinrichtung FRCV auch dazu angewiesen werden, vor dem Versenden an das Datenendgerät DT Faxnachrichten zu interpretieren. Z.B. kann die Faxempfangseinrichtung FRCV damit beauftragt werden, den in einer Faxnachricht enthaltenen Text mit Hilfe einer OCR-Software (Optical Character Recognition) zu ermitteln und als ASCII-Zeichenkette an das Datenendgerät DT zu versenden. Der Text ist dann nicht mehr nur in einer Bildinformation enthalten, wie er es in der ursprünglichen Faxnachricht war, sondern ist als inhaltlich ausgewertete Bildinformation, nämlich als ASCII-Zeichenkette z.B. von einer Textverarbeitung in dem Datenendgerät DT unmittelbar weiterverarbeitbar. Die Faxnachricht ist in dieser ausgewerteten Form allerdings kein Abbild, kein Facsimile des ursprünglich als Faxnachricht versandten Dokumentes mehr. Der Inhalt der Faxnachricht bleibt aber unverändert. Die Faxempfangseinrichtung FRCV kann eine Faxnachricht in der ausgewerteten Form wie auch in Bildformatform in eine Beschreibung in der HTML-Beschreibungssprache einbinden. Dann braucht das Datenendgerät DT keine weiteren Hilfsmittel zum Empfang von Faxnachrichten außer dem bereits genannten Browser zur Interpretation von HTML-Beschreibungen, der für die Kommunikation mit der Faxempfangseinrichtung FRCV über das Internet ohnehin vorteilhaft eingesetzt werden kann.

Als Weiterentwicklung der Beschreibungsmöglichkeiten von Informationen mit HTML-Dokumenten bietet die Sprache JAVA erweiterte Möglichkeiten für die Ausgabe von Daten und insbesondere für deren interaktive Modifikation. Bei Verwendung von JAVA versendet die Faxempfangseinrichtung FRCV einen aus einem compilierten Quelltext erzeugten Zwischencode, ein sogenanntes JAVA-Applet an das Datenendgerät DT, das dieses mit einem JAVA-lnterpreter in Maschinencode übersetzt und anschließend das so erzeugte Maschinencode-Programm ausführt, d.h. Bildsequenzen, Akustiksequenzen oder Abfragemasken zur Auswahl von bei der Faxempfangseinrichtung FRCV abzurufenden Faxnachrichten erzeugt. Da in die JAVA-Applets auch Kommunikationsmittel der lnternetprotokoll-Familie TCP/lP (Transmission Control Protocol / Internet Protocol) integriert werden können, wird die Rücksendung von Steuerkommandos, z.B. bei der Auswahl von Faxnachrichten, von dem Datenendgerät DT an die Faxempfangseinrichtung FRCV wesentlich erleichtert.

Soll der Teilnehmer von Faxempfangseinrichtung FRCV über den Eingang einer Faxnachricht benachrichtigt werden, kann die Faxempfangseinrichtung FRCV den Teilnehmer z.B. über die Vermittlungsstelle EX1 an einem Telefonapparat des Teilnehmers anrufen und dem Teilnehmer die Benachrichtigung in gesprochener Form abspielen. Die gesprochene Benachrichtigung kann von einem Sprachgenerator erzeugt werden. Die Faxempfangseinrichtung FRCV kann dem Teilnehmer die Benachrichtigung auch auf dem Wege des sogenannten Short Message Services (SMS) senden, wenn der Teilnehmer über ein Endgerät eines Mobilfunk-Telekommunikationsnetzes verfügt. Wenn der Teilnehmer mit einem ISDN-Endgerät Dienste eines ISDN-Telekommunikationsnetzes nutzen kann, kann die Faxempfangseinrichtung FRCV die Benachrichtigung an das ISDN-Endgerät im Rahmen einer User-to-User-Signalisierung senden, wie sie das DSS1-Protokoll für ISDN-Telekommunikationsnetze als Leistungsmerkmal "kundenspezifische Zeichengabeinformation während einer Verbindung" unter der Abkürzung ,,UUS3" anbietet. Das ISDN-Endgerät kann diese User-to-User-signalisierte Benachrichtigung dem Teilnehmer auf einer Anzeigevorrichtung anzeigen. Die Faxempfangseinrichtung FRCV kann auch die Vermittlungsstelle EX1 dazu anweisen, dem Teilnehmer als Hinweis auf bereitliegende Faxnachrichten ein besonderes Freizeichen zu geben oder eine Ansage mit einem Hinweis auf bereitliegende Faxnachrichten abzuspielen, wenn der Teilnehmer den Hörer seines in der Figur nicht dargestellten Telefonendgerätes abhebt, das an einen Teilnehmeranschluß der Vermittlungsstelle EX1 angeschlossen ist. Die Vermittlungsstelle EX1 kann die Anweisung zur Gabe eines besonderen Freizeichens oder zur Abspielung des Hinweises auch an eine weitere, in der Figur nicht dargestellte Vermittlungsstelle weitergeben, falls das Telefonendgerät im Anschlußbereich dieser letztgenannten Vermittlungsstelle liegt.

Wenn das Datenendgerät DT ohnehin häufig für die Nutzung des Internets eingesetzt wird, kann die Faxempfangseinrichtung FRCV das Datenendgerät DT auf besonders einfache Weise darüber informieren, daß für den Teilnehmer Faxnachrichten eingegangen sind. Nachdem die Faxempfangseinrichtung FRCV eine Faxnachricht für den Teilnehmer empfangen hat, kann sie z.B. prüfen, ob der Teilnehmer mit seinem Datenendgerät DT mit dem Internet verbunden ist, indem die Faxempfangseinrichtung FRCV an das Datenendgerät DT eine Benachrichtigung sendet. Als Adresse für diese Benachrichtigung kann die Faxempfangseinrichtung FRCV eine Internet-Adresse verwenden, z.B. eine URL-Adresse (Uniform Resource Locator), die dem Datenendgerät DT zugeordnet ist. Wenn das Datenendgerät DT der Faxempfangseinrichtung FRCV auf diese Benachrichtigung antwortet, kann die Faxempfangseinrichtung FRCV die Faxnachricht unmittelbar an das Datenendgerät DT senden. Weiterhin ist es möglich, daß die Faxempfangseinrichtung FRCV eine empfangene Faxnachricht automatisch, ohne vorherige Benachrichtigung an das Datenendgerät DT versendet, soweit das Datenendgerät DT bereits eine aktive Verbindung zu dem On-Line-Datennetzwerk ODN hat, also eine sogenannte On-Line-Session mit dem Internet im Gange ist. Wenn das Datenendgerät DT nicht empfangsbereit sein sollte, kann die Faxempfangseinrichtung FRCV den Teilnehmer, wie bereits beschrieben, auch auf anderen Wegen über den Eingang einer Faxnachricht informieren. Außerdem kann die Faxempfangseinrichtung FRCV auch eine E-Mail an den Teilnehmer senden, falls der Teilnehmer über einen Zugang zu einem E-Mail-Service verfügt.

Neben der besonders vorteilhaften Abrufmöglichkeit von empfangenen Faxnachrichten bei der Faxempfangseinrichtung FRCV über das Datenendgerät DT und das On-Line-Datennetzwerk ODN, bei der kein Faxgerät notwendig ist und bei der auch das Datenendgerät DT keine Vorrichtungen eines Faxgerätes aufweisen muß, bietet die Faxempfangseinrichtung FRCV auch eine alternative Abrufmöglichkeit einer empfangenen Faxnachricht mit Hilfe eines in der Figur nicht dargestellten Faxgerätes. Dieses Faxgerät kann über ein Telekommunikationsnetz zu der Faxempfangseinrichtung FRCV eine Verbindung aufbauen, vergleichbar mit der Verbindung zwischen der Faxsendeeinrichtung FSND und der Faxempfangseinrichtung FRCV über die Verbindung CON, die Vermittlungsstelle EX1 und die Verbindung FC. Nachdem das Faxgerät durch Angabe einer Zugangskennziffer, z.B. über eine DTMF-Zeichengabe (Dual Tone Multi Frequency), seine Zugangsberechtigung zu den für den Teilnehmer bereitliegenden Faxnachricht nachgewiesen hat, sendet die Faxempfangseinrichtung FRCV die Faxnachricht an das Faxgerät. In vergleichbarer Weise wie das Faxgerät kann der Teilnehmer auch mit einem ebenfalls in der Figur nicht dargestellten Telefonapparat eine Verbindung mit der Faxempfangseinrichtung FRCV aufbauen. Die Faxempfangseinrichtung FRCV kann dann eine bereitliegende Faxnachricht, möglicherweise auch nur deren Titel, z.B. mit Hilfe der erwähnten OCR-Software interpretieren und mittels eines Sprachgenerators dem Teilnehmer vorlesen.

## Patentansprüche

1. Verfahren zum Empfang von Faxnachrichten durch eine Faxempfangseinrichtung (FRCV) in einem Telekommunikationsnetz anstelle eines Faxgerätes eines Teilnehmers, wobei bei dem Verfahren die Faxempfangseinrichtung (FRCV) erkennt, daß sie eine ankommende Faxnachricht anstelle eines Faxgerätes empfangen soll und wobei die Faxempfangseinrichtung (FRCV) die Faxnachricht empfängt und speichert, **dadurch gekennzeichnet**, daß bei dem Verfahren ein Datenendgerät (DT) des Teilnehmers eine Verbindung über ein On-Line-Datennetzwerk (ODN) zu der Faxempfangseinrichtung (FRCV) aufbaut, daß die Faxempfangseinrichtung (FRCV) die Faxnachricht über das On-Line-Datennetzwerk (ODN) an das Datenendgerät (DT) sendet und daß das Datenendgerät (DT) oder die Faxempfangseinrichtung (FRCV) die Verbindung über das On-Line-Datennetzwerk (ODN) zu der Faxempfangseinrichtung (FRCV) beenden.

2. Verfahren nach Anspruch 1, dadurch gekennzeichnet, daß die Faxempfangseinrichtung (FRCV) im Zusammenwirken mit einer Vermittlungsstelle (EX1) erkennt, daß sie eine ankommende Faxnachricht anstelle eines Faxgerätes empfangen soll.

3. Verfahren nach Anspruch 1, dadurch gekennzeichnet, daß die Faxempfangseinrichtung (FRCV) die Faxnachricht aus einem ersten Datenformat, das für die Kommunikation zwischen zwei Faxgeräten üblich ist, in ein für das Datenendgerät (DT) verständliches zweites Datenformat konvertiert und daß die Faxempfangseinrichtung (FRCV) dem Datenendgerät (DT) die Faxnachricht in dem zweiten Datenformat sendet.

4. Verfahren nach Anspruch 1, dadurch gekennzeichnet, daß die Faxempfangseinrichtung (FRCV) nach dem Empfang der Faxnachricht an ein Endgerät des Teilnehmers eine Nachricht sendet, daß eine Faxnachricht gespeichert wurde.

5. Verfahren nach Anspruch 1, dadurch gekennzeichnet, daß nach dem Aufbau der Verbindung über ein On-Line-Datennetzwerk (ODN) zu der Faxempfangseinrichtung (FRCV) das Datenendgerät (DT) einen Zugangswunsch des Teilnehmers zu der Faxnachricht sendet, die Faxempfangseinrichtung (FRCV) den Zugangswunsch überprüft und festgestellt, ob der Teilnehmer eine Zugangsberechtigung zu der Faxnachricht besitzt.

6. Verfahren nach Anspruch 1, dadurch gekennzeichnet, daß dem Teilnehmer eine für den Empfang von Faxnachrichten bestimmte Fax-Teilnehmernummer zugeteilt wird und daß die Faxempfangseinrichtung (FRCV) eine Faxnachricht anstelle des Faxgerätes des Teilnehmers empfängt, wenn die Faxnachricht an die Fax-Teilnehmernummer gerichtet ist.

7. Verfahren nach Anspruch 1, dadurch gekennzeichnet, daß die Faxempfangseinrichtung (FRCV) eine Faxnachricht anstelle des Faxgerätes des Teilnehmers empfängt, wenn die Faxnachricht an eine UPT (Universal Personal Telecommunications)-Nummer des Teilnehmers gerichtet ist.

8. Faxempfangseinrichtung (FRCV) für ein Telekommunikationsnetz zum Empfang von Faxnachrichten anstelle eines Faxgerätes eines Teilnehmers, wobei die Faxempfangseinrichtung (FRCV) Mittel aufweist, um die Faxnachricht zu empfangen und wobei die Faxempfangseinrichtung (FRCV) Mittel aufweist, um die Faxnachricht zu speichern, **dadurch gekennzeichnet**, daß die Faxempfangseinrichtung (FRCV) eine Schnittstelle aufweist, über die ein Datenendgerät (DT) des Teilnehmers eine Verbindung über ein On-Line-Datennetzwerk (ODN) zu der Faxempfangseinrichtung (FRCV) aufbauen kann und daß die Faxempfangseinrichtung (FRCV) Mittel aufweist, um die Faxnachricht über das On-Line-Datennetzwerk (ODN) an das Datenendgerät (DT) zu senden.

9. Faxempfangseinrichtung (FRCV) nach Anspruch 7, dadurch gekennzeichnet, daß die Faxempfangseinrichtung (FRCV) eine Schnittstelle aufweist, über die ein Endgerät eine Verbindung über das Telekommunikationsnetz zu der Faxempfangseinrichtung (FRCV) aufbauen kann, und daß die Faxempfangseinrichtung (FRCV) Mittel aufweist, um die Faxnachricht über das Telekommunikationsnetz an das Endgerät zu senden.

10. Server für ein Telekommunikationsnetz zum Empfang von Faxnachrichten anstelle eines Faxgerätes eines Teilnehmers, wobei der Server Mittel aufweist, um die Faxnachricht zu empfangen und wobei der Server Mittel aufweist, um die Faxnachricht zu speichern, **dadurch gekennzeichnet**, daß der Server eine Schnittstelle aufweist, über die ein Datenendgerät (DT) des Teilnehmers eine Verbindung über ein On-Line-Datennetzwerk (ODN) zu dem Server aufbauen kann und daß der Server Mittel aufweist, um die Faxnachricht über das On-Line-Datennetzwerk (ODN) an das Datenendgerät (DT) zu senden.

11. Vermittlungsstelle für ein Telekommunikationsnetz zum Empfang von Faxnachrichten anstelle eines Faxgerätes eines Teilnehmers, wobei die Vermittlungsstelle Mittel aufweist, um zu erkennen, daß sie eine ankommende Faxnachricht anstelle eines Faxgerätes empfangen soll, wobei die Vermittlungsstelle Mittel aufweist, um die Faxnachricht zu empfangen und wobei die Vermittlungsstelle Mittel aufweist, um die Faxnachricht zu speichern **dadurch gekennzeichnet**, daß die Vermittlungsstelle eine Schnittstelle aufweist, über die ein Datenendgerät (DT) des Teilnehmers eine Verbindung über ein On-Line-Datennetzwerk (ODN) zu der Vermittlungsstelle aufbauen kann und daß die Vermittlungsstelle Mittel aufweist, um die Faxnachricht über das On-Line-Datennetzwerk (ODN) an das Datenendgerät (DT) zu senden.
